# EUROPÄISCHE PATENTANMELDUNG

(11) **EP 4 845 304 A1**
(43) Veröffentlichungstag der Anmeldung: **25.11.2026**
(21) Anmeldenummer: 26173934.6
(22) Anmeldetag: 22.04.2026
(51) Int. Cl.: H05B 1/02, A47J 27/56, A47J 27/212

(54) **VERFAHREN FÜR EINE GARGERÄTEVORRICHTUNG, GARGERÄTEVORRICHTUNG, GARGERÄT UND GARGERÄTESYSTEM**

(30) Priorität: 20.05.2025 EP 25382509
(71) Anmelder: BSH Hausgeräte GmbH, 81739 München (DE)
(72) Erfinder: Valeau Martin, David, 50009 Zaragoza (ES); Rodriguez Larrosa, Agostina, 50011 Zaragoza (ES); Franco Gutierrez, Carlos, 50017 Zaragoza (ES); Mir Bel, Jorge, 50019 Zaragoza (ES); Marzo Alvarez, Teresa Del Carmen, 50006 Zaragoza (ES); Cabeza Gozalo, Tomas, 50010 Zaragoza (ES); Comin Sanchez, Diego, 50019 Zaragoza (ES)

(57) **Zusammenfassung**

Um einen Bedienkomfort und eine Betriebssicherheit zu steigern, wird ein Verfahren für eine Gargerätevorrichtung (10a; 10b) zu einem Erkennen eines Zielzubereitungszustands in einem Gargeschirr (50a; 50b) vorgeschlagen, wobei die Gargerätevorrichtung (10a; 10b) eine Sensoreinheit (12a; 12b) aufweist, welche zumindest eine Kenngröße eines charakteristischen Schalls ausgehend von dem Gargeschirr (50a; 50b) in dem Zielzubereitungszustand ermittelt und wobei eine Auswerteeinheit (14a; 14b) den charakteristischen Schall und den dem charakteristischen Schall zugeordneten Zielzubereitungszustand in dem Gargeschirr (50a; 50b) erkennt.

## Beschreibung

Die Erfindung betrifft ein Verfahren für eine Gargerätevorrichtung nach Anspruch 1, eine Gargerätevorrichtung nach Anspruch 12, ein Gargerät nach Anspruch 13 und ein Gargerätesystem nach Anspruch 14.

Aus EP 2590473 A1 und WO 2021180555 A1 sind bereits Vorrichtungen bekannt, welche dazu vorgesehen sind, Vibrationen bezüglich einer kochenden Flüssigkeit zu detektieren, wobei hierbei eine Kavitation der Flüssigkeit, also ein passives, insbesondere zufälliges, Geräusch eines "Blubberns" der Flüssigkeit, ermittelt wird.

Die Aufgabe der Erfindung besteht insbesondere, aber nicht beschränkt darauf, darin, eine gattungsgemäße Vorrichtung mit verbesserten Eigenschaften hinsichtlich eines Bedienkomforts und einer Betriebssicherheit. bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Es wird ein Verfahren für eine Gargerätevorrichtung, insbesondere für eine Kochfeldvorrichtung, zu einem Erkennen eines Zielzubereitungszustands in einem Gargeschirr vorgeschlagen, wobei die Gargerätevorrichtung, eine Sensoreinheit aufweist, welche, insbesondere in einem Sensierungsschritt, zumindest eine Kenngröße eines charakteristischen Schalls ausgehend von dem Gargeschirr in dem Zielzubereitungszustand ermittelt, und wobei eine Auswerteeinheit, insbesondere in einem Auswerteschritt, den charakteristischen Schall und den dem charakteristischen Schall zugeordneten Zielzubereitungszustand in dem Gargeschirr erkennt.

Durch eine derartige Ausgestaltung kann insbesondere ein besonders hoher Bedienkomfort für einen Bediener der Gargerätevorrichtung erreicht werden, indem der Zielzubereitungszustand in dem Gargeschirr automatisiert ermittelt wird. Weiterhin kann eine Betriebssicherheit gesteigert werden, indem der Zielzubereitungszustand, welcher möglicherweise Beschädigungen an dem Gargeschirr und/oder eine Gefahrensituation für den Bediener bedingen könnte, automatisiert erkannt wird. Weiterhin kann eine Energieeffizienz gesteigert werden, indem der Zielzubereitungszustand automatisiert, auch bei einer Abwesenheit des Bedieners, beispielsweise wenn der Bediener abgelenkt ist und/oder andere Haushaltsarbeiten und/oder andere Kochaufgaben, wie beispielsweise ein Schneiden einer Kochzutat, erledigt, ermittelt wird. Ferner kann ein Kochergebnis durch die Erkennung des Zielzubereitungszustands verbessert werden.

Unter einer "Gargerätevorrichtung", insbesondere einer "Kochfeldvorrichtung", soll insbesondere zumindest ein Teil, insbesondere eine Unterbaugruppe, eines Gargeräts, insbesondere eines Kochfelds, verstanden werden. Die Gargerätevorrichtung, insbesondere die Kochfeldvorrichtung, kann auch das gesamte Gargerät, insbesondere das gesamte Kochfeld, umfassen. Das Gargerät ist besonders bevorzugt als ein Kochfeld, vorzugsweise als ein Induktionskochfeld oder beispielsweise als ein Widerstandskochfeld oder als ein Gaskochfeld ausgebildet. Alternativ kann das Gargerät beispielsweise als ein Backofen und/oder eine Mikrowelle und/oder ein Grillgerät und/oder ein Dampfgargerät und/oder als ein anderes, der Fachperson als sinnvoll erscheinendes Gargerät, ausgebildet sein. Das Gargerät, insbesondere die Gargerätevorrichtung, weist vorzugsweise eine Heizeinheit auf. Die Heizeinheit ist vorzugsweise, insbesondere zumindest in einem Heizschritt des Verfahrens, dazu vorgesehen, das insbesondere auf und/oder in dem Gargerät aufgestellte, Gargeschirr zu erhitzen und bevorzugt zumindest ein Fluid, beispielsweise Wasser, in dem Gargeschirr, insbesondere zumindest bis zu einem Sieden, zu erhitzen. Die Heizeinheit überführt das Fluid in dem Gargeschirr, insbesondere in dem Heizschritt, in den Zielzubereitungszustand. Die Heizeinheit weist vorzugsweise zumindest ein Heizelement auf, welches dazu vorgesehen ist, das zumindest eine Gargeschirr, insbesondere in dem Heizschritt, zu erhitzen. Es ist denkbar, dass die Heizeinheit genau ein Heizelement jeweils zu einem Erhitzen genau eines Gargeschirrs aufweist. Alternativ oder zusätzlich ist denkbar, dass zumindest ein, beispielsweise mehr als ein, Heizelement zu dem Erhitzen des Gargeschirrs vorgesehen ist. Das Heizelement ist vorzugsweise als eine Heizspule, beispielsweise als eine Induktionsspule oder als eine Widerstandsheizspule des Kochfelds, ausgebildet. Die Heizeinheit weist vorzugsweise Bauelemente zu einer Versorgung des Heizelements zu einer Bereitstellung einer Heizleistung durch das Heizelement, beispielsweise Bauelemente eines Schaltplans zu einer Versorgung der Heizspule, beispielhaft zumindest einen Wechselrichter, auf. Alternativ kann das Heizelement als ein Gasheizelement eines Gaskochfelds oder in einer anderen, einer Fachperson als sinnvoll erscheinenden Ausgestaltung ausgebildet sein. Die Heizeinheit stellt, insbesondere zumindest in dem Heizschritt, vorzugsweise zumindest eine Heizzone bereit, in welcher das Gargeschirr zu der Erhitzung anordnungsbar und/oder angeordnet ist und welcher insbesondere zumindest ein Heizelement zugeordnet ist. Die Heizzone ist vorzugsweise auf einem Aufstellelement des Gargeräts, insbesondere der Gargerätevorrichtung, ausgebildet. Das Gargeschirr ist insbesondere zumindest zu dem Erhitzen des Gargeschirrs, insbesondere zumindest in dem Heizschritt, auf dem Aufstellelement aufgestellt. Vorzugsweise weist das Aufstellelement zumindest eine Aufstellfläche zu einem Kontakt mit dem aufgestellten Gargeschirr auf. Das Aufstellelement ist bevorzugt als eine Aufstellplatte ausgebildet, welche vorzugsweise als eine Kochfeldplatte ausgebildet ist. Alternativ kann die Aufstellplatte als eine Küchenarbeitsplatte ausgebildet sein, welche, insbesondere im Gegensatz zu der Kochfeldplatte, zusätzlich dazu vorgesehen ist, einen Lebensmittelzubereitungsbereich bereitzustellen, in welchem beispielsweise ein Schneiden und/oder Mischen und/oder Stampfen und/oder Schälen von Lebensmitteln durchgeführt werden kann. Alternativ kann das Aufstellelement als jegliches der Fachperson als sinnvoll erscheinendes Aufstellelement entsprechend einer Ausbildung des Gargeräts ausgebildet sein, auf welches das Gargeschirr zu der Erhitzung mittels der Heizeinheit aufgestellt wird, beispielsweise als ein Aufstellgitter eines als Gaskochfeld ausgebildeten Gargeräts oder dergleichen.

Das Gargeschirr emittiert den charakteristischen Schall, insbesondere in dem Heizschritt, in dem Zielzubereitungszustand. Der Zielzubereitungszustand ist vorzugsweise als ein Zustand des Fluids in dem Gargeschirr während der Erhitzung mittels der Heizeinheit, insbesondere in dem Heizschritt, also vorzugsweise während einer Zubereitung des Fluids und/oder eines Lebensmittels in dem Gargeschirr mittels des Fluids, ausgebildet und ist insbesondere Zielbetriebsparametern, beispielsweise bezüglich eines Drucks und/oder einer Temperatur, in dem Gargeschirr zugeordnet. Das Fluid kann flüssig und/oder gasförmig ausgebildet sein und weist vorzugsweise Wasser auf oder ist als dieses ausgebildet. Der Zielzubereitungszustand ist vorzugsweise abhängig von einer aktuellen Temperatur des Fluids und insbesondere des Gargeschirrs und/oder abhängig von einer vorhergehenden Zeitentwicklung der Temperatur während der Erhitzung mittels der Heizeinheit. Vorzugsweise ist der Zielzubereitungszustand als ein spezifischer Aggregatzustand des Fluids, welcher insbesondere ein spezifisches Verhältnis zwischen einem Flüssigkeitsanteil und einem Gasanteil des Fluids aufweist, ausgebildet und/oder weist ein spezifisches Verhältnis zwischen zumindest einem Ausgangsfluid, beispielsweise Wasser, und einem Zielfluid, beispielsweise Kaffeewasser, auf. Der Zielzubereitungszustand ist insbesondere als ein Zustand ausgebildet, in welchem eine von dem Bediener angesteuerte Zubereitung in dem Gargeschirr, insbesondere des Fluids und/oder des Lebensmittels in dem Gargeschirr mittels des Fluids, fertiggestellt ist und/oder zumindest ein Zielparameter, beispielsweise ein Zieldruck und/oder eine Zieltemperatur, in dem Gargeschirr erreicht ist, basierend auf welchem insbesondere die Erhitzung mittels der Heizeinheit reduziert oder gestoppt werden soll oder welcher für eine weitergeführte Zubereitung beibehalten werden soll. Der charakteristische Schall ist insbesondere als ein für das Gargeschirr charakteristischer Schall in dem Zielzubereitungszustand ausgebildet und vorzugsweise durch den Aufbau und/oder die Geometrie des Gargeschirrs vordefiniert. Der charakteristische Schall ist insbesondere von dem Zielzubereitungszustand des Fluids in dem Gargeschirr und von dem Aufbau des Gargeschirrs abhängig. Das Gargeschirr weist vorzugsweise zumindest einen Lebensmittelaufnahmebereich, insbesondere einen Fluidaufnahmebereich, und zumindest ein Zusatzelement, bevorzugt zumindest ein Strömungselement, insbesondere ein Auslasselement, zumindest zur Erzeugung des charakteristischen Schalls auf. Das Strömungselement ist vorzugsweise als ein, insbesondere in dem Zielzubereitungszustand, akustisch wirksames Funktionsbauteil ausgebildet. Beispielsweise kann das Strömungselement als ein Ventil und/oder als ein Rohr und/oder als ein Kanal ausgebildet sein, und kann beispielhaft zumindest eine Drossel aufweisen. Der charakteristische Schall wird vorzugsweise mittels des Strömungselements, insbesondere bei einem Durchströmen des Strömungselements von Wasserdampf, in dem Zielzubereitungszustand erzeugt. Der charakteristische Schall ist insbesondere von einem Aufbau und/oder einer Geometrie, insbesondere von einer Länge und/oder einer Breite und/oder dergleichen, des Strömungselements abhängig. Der dem Zielzubereitungszustand zugeordnete charakteristische Schall ist insbesondere als zumindest eine charakteristische Vibration des Gargeschirrs und/oder einer, insbesondere um das Gargeschirr angeordneten, Luft ausgebildet und weist vorzugsweise zumindest eine Frequenz im hörbaren Bereich auf. Der charakteristische Schall ist in einer Umgebung des Gargeschirrs vorzugsweise durch den Bediener wahrnehmbar und insbesondere erkennbar. Vorzugsweise vibriert das Gargeschirr in dem Zielzubereitungszustand mit zumindest einer, insbesondere für das Gargeschirr charakteristischen, Frequenz. Der charakteristische Schall, insbesondere die charakteristische Vibration, wird in dem Zielzubereitungszustand vorzugsweise über das Gargeschirr und beispielsweise über die Luft, an das das Gargeschirr kontaktierende Aufstellelement übertragen. Das Aufstellelement überträgt den charakteristischen Schall, insbesondere die charakteristische Vibration, in dem Zielzubereitungszustand bevorzugt an die Sensoreinheit. Unter einer "Sensoreinheit" soll in diesem Zusammenhang insbesondere eine Einheit verstanden werden, die, insbesondere in dem Sensierungsschritt des Verfahrens, dazu vorgesehen ist, zumindest die Kenngröße aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, der Fachperson als sinnvoll erscheinende Sensoreinheiten denkbar. Die Sensoreinheit weist vorzugsweise zumindest ein Sensorelement auf, welches bevorzugt zumindest einem, beispielsweise jeweils genau einem, Heizelement der Heizeinheit und/oder einer, beispielsweise zumindest in einem Heizzustand genau einer, Heizzone bereitgestellt durch die Heizeinheit zugeordnet ist und insbesondere in einer Umgebung von dem Heizelement und/oder der Heizzone, insbesondere mit einem Abstand von maximal einem Durchmesser des Heizelements und/oder der Heizzone, bevorzugt maximal eines halben Durchmessers und besonders bevorzugt maximal eine Viertels des Durchmessers von dem Heizelement und/oder der Heizzone angeordnet ist. Alternativ kann das Sensorelement einen größeren Abstand zu dem Heizelement und/oder der Heizzone aufweisen und/oder die Gargerätevorrichtung weniger Sensorelemente als Heizzonen und/oder Heizelemente aufweisen. Vorzugsweise ist die Sensoreinheit, insbesondere das Sensorelement, insbesondere in dem Sensierungsschritt, dazu vorgesehen, Schall, insbesondere die zumindest eine Kenngröße des charakteristischen Schalls, basierend auf einer Übertragung des Schalls über das Aufstellelement zu ermitteln. Das zumindest eine Sensorelement ist vorzugsweise kontaktierend an dem Aufstellelement, insbesondere an der Aufstellplatte, fixiert und bevorzugt dazu vorgesehen, insbesondere in dem Sensierungsschritt, zumindest eine Kenngröße von Schall, insbesondere die zumindest eine Kenngröße des charakteristischen Schalls, ausgehend von dem Gargeschirr übertragen, insbesondere lediglich, über das Aufstellelement zu ermitteln. Alternativ oder zusätzlich kann das Sensorelement kontaktierend an einem Übermittlungselement fixiert sein, wobei das Übermittlungselement das Aufstellelement kontaktiert oder gemittelt mit diesem schallübertragen verbunden ist, und den Schall an das Sensorelement überträgt, und dazu vorgesehen sein, insbesondere in dem Sensierungsschritt, zumindest eine Kenngröße von Schall, insbesondere die zumindest eine Kenngröße des charakteristischen Schalls, ausgehend von dem Gargeschirr übertragen über das Aufstellelement und zumindest das Übermittlungselement, zu ermitteln. Alternativ oder zusätzlich ist denkbar, dass die Sensoreinheit, insbesondere das zumindest eine Sensorelement dazu vorgesehen ist, insbesondere in dem Sensierungsschritt, zumindest eine Kenngröße von Schall, insbesondere die zumindest eine Kenngröße des charakteristischen Schalls, ausgehend von dem Gargeschirr übertragen über die Luft zu ermitteln, wobei die Sensoreinheit insbesondere Luftdruckänderungen ermittelt. Die Sensoreinheit, insbesondere das Sensorelement, kann zumindest einen akustischen Sensor und/oder zumindest einen Vibrationssensor, insbesondere zumindest einen Beschleunigungssensor, aufweisen. Die Kenngröße ist insbesondere eine von dem charakteristischen Schall, bevorzugt eindeutig, abhängige Kenngröße. Die Kenngröße ist insbesondere von dem Zielzubereitungszustand in dem Gargeschirr und von dem Gargeschirr an sich, bevorzugt von einer Art, insbesondere von dem Aufbau und/oder der Geometrie, des Gargeschirrs, abhängig. Die Sensoreinheit ist, insbesondere in dem Sensierungsschritt, vorzugsweise zu einer Ermittlung zumindest eines Messsignals vorgesehen, welches die zumindest eine Kenngröße aufweist.

Die Auswerteeinheit weist vorzugsweise eine Recheneinheit und insbesondere zusätzlich zur Recheneinheit eine Speichereinheit mit einem darin gespeicherten Programm, das dazu vorgesehen ist, von der Recheneinheit ausgeführt zu werden, auf. Die Auswerteeinheit ist vorzugsweise, insbesondere in dem Auswerteschritt des Verfahrens, dazu vorgesehen, die zumindest eine Kenngröße zu der Erkennung des charakteristischen Schalls und zu der Erkennung des dem charakteristischen Schall zugeordneten Zielzubereitungszustands in dem Gargeschirr auszuwerten. Vorzugsweise erkennt die Auswerteeinheit den charakteristischen Schall und den dem charakteristischen Schall zugeordneten Zielzubereitungszustand, insbesondere in dem Auswerteschritt, in dem Gargeschirr basierend auf der zumindest einen mittels der Sensoreinheit ermittelten Kenngröße. Die Auswerteeinheit ist vorzugsweise, insbesondere in dem Auswerteschritt, dazu vorgesehen, basierend auf der Kenngröße die Art des Gargeschirrs zu ermitteln, in welchem das Fluid, in dem Zielzubereitungszustand den charakteristischen Schall erzeugt. Die Auswerteeinheit kann Teil der Gargerätevorrichtung und insbesondere des Gargeräts sein. Die Auswerteeinheit kann als ein elektrisches und/oder elektronisches Bauteil der Gargerätevorrichtung und insbesondere des Gargeräts ausgebildet sein. Die Auswerteeinheit kann drahtgebunden mit einem Rest der Gargerätevorrichtung, insbesondere zumindest mit der Sensoreinheit und/oder mit einer Steuereinheit des Gargeräts und/oder mit einer Benutzerschnittstelle des Gargeräts ausgebildet sein. Das Gargerät, insbesondere die Gargerätevorrichtung, weist vorzugsweise die Steuereinheit auf. Unter einer "Steuereinheit" soll insbesondere eine elektronische Einheit verstanden werden, die vorzugsweise in einer Steuer- und/oder Regeleinheit des Gargeräts zumindest teilweise integriert ist und die vorzugsweise dazu vorgesehen ist, insbesondere zumindest in dem Heizschritt, zumindest die Bauteile zu der Versorgung des zumindest einen Heizelements, beispielsweise die Wechselrichter der Heizeinheit, zu steuern und/oder zu regeln. Vorzugsweise umfasst die Steuereinheit eine Steuerrecheneinheit und insbesondere zusätzlich zur Steuerrecheneinheit eine Steuerspeichereinheit mit einem darin gespeicherten Steuer- und/oder Regelprogramm, das dazu vorgesehen ist, von der Steuerrecheneinheit ausgeführt zu werden. Die Steuereinheit kann separat zu der Auswerteeinheit ausgebildet sein oder zumindest teilweise einteilig mit dieser ausgebildet sein, wobei insbesondere die Recheneinheit und die Steuerrecheneinheit und/oder die Speichereinheit und die Steuerspeichereinheit jeweils zumindest teilweise dieselben Bauteile aufweisen. Beispielsweise kann die Steuereinheit die Auswerteeinheit aufweisen. Die Steuereinheit und die Auswerteeinheit können zumindest teilweise auf einer selben Elektronikplatine und/oder Leiterplatte ausgebildet sein.

Vorzugsweise ist das Verfahren für die Gargerätevorrichtung als ein Verfahren zu einer Ausführung eines Kochprozesses ausgeführt mittels der Gargerätevorrichtung ausgebildet. Das Verfahren für die Gargerätevorrichtung wird zumindest teilweise, insbesondere vollständig oder lediglich teilweise, durch die Gargerätevorrichtung ausgeführt. Das Verfahren kann vollständig mittels der Gargerätevorrichtung und/oder mittels des Gargeräts ausgeführt werden. Alternativ ist denkbar, dass die Auswerteeinheit zumindest teilweise separat zu der Gargerätevorrichtung und insbesondere separat zu dem Gargerät ausgebildet ist. Die Auswerteeinheit kann beispielsweise zumindest teilweise als eine Datenwolken-Einheit und/oder als Teil eines portablen Benutzerendgeräts, vorzugsweise eines Smart-Devices, insbesondere eines Smartphones, eines Tablets, eines Sprachassistenzgeräts oder dergleichen, ausgebildet sein. Die Auswerteeinheit und die Gargerätevorrichtung, insbesondere das Gargerät, können insbesondere Teil eines Gargerätesystems sein, welches zu der Ausführung des Verfahrens zu dem Erkennen des Zielzubereitungszustands vorgesehen ist, wobei insbesondere jeweils die Gargerätevorrichtung, insbesondere das Gargerät, zumindest einen Verfahrensschritt des Verfahrens, insbesondere zumindest den Sensierungsschritt und vorzugsweise den Heizschritt, und die Auswerteeinheit zumindest einen weiteren Verfahrensschritt des Verfahrens, insbesondere zumindest den Auswerteschritt, ausführt. Die Auswerteeinheit und die Sensoreinheit und/oder die Auswerteeinheit und die Steuereinheit sind als Teil des Gargerätesystems vorzugsweise drahtlos, insbesondere zumindest datentechnisch, miteinander verbunden, insbesondere zu der Übertragung der Kenngröße und/oder eines Ergebnisses der Erkennung, beispielsweise mittels Bluetooth, Wifi, ZigBee und/oder dergleichen.

Das Gargerät, insbesondere die Gargerätevorrichtung, weist vorzugsweise eine Ausgabeeinheit auf, welche, insbesondere in einem Ausgabeschritt, vorzugsweise zu einer optischen und/oder akustischen und/oder haptischen Ausgabe zumindest einer Information an einen Bediener vorgesehen ist. Die Ausgabeeinheit ist vorzugsweise als eine Anzeigeeinheit zu einer optischen Anzeige der Information ausgebildet und weist insbesondere zumindest ein Display und/oder zumindest ein Lämpchen zu der Anzeige auf. Das Gargerät, insbesondere die Gargerätevorrichtung, weist vorzugsweise eine Eingabeeinheit mit zumindest einem Bedienelement auf, mittels welcher der Bediener mittels einer Bedienoperation an dem zumindest einen Bedienelement zumindest eine Einstellung, insbesondere der Steuereinheit, zu der Ansteuerung der Heizeinheit, einstellen kann. Die Ausgabeeinheit und die Eingabeeinheit können zumindest teilweise einteilig ausgebildet sein und insbesondere gleiche Bauteile teilen. Die Ausgabeeinheit und die Eingabeeinheit können vollständig einteilig miteinander ausgebildet sein, beispielsweise in einer Ausbildung als Touchscreen. Die Ausgabeeinheit und die Eingabeeinheit sind vorzugsweise Teil einer Bedienerschnittstelle des Gargeräts, insbesondere der Gargerätevorrichtung. Alternativ oder zusätzlich ist denkbar, dass die Bedienerschnittstelle zumindest teilweise, insbesondere die Ausgabeeinheit und/oder die Eingabeeinheit, separat zu dem Gargerät ausgebildet ist und beispielsweise zumindest teilweise Teil des portablen Benutzerendgeräts, insbesondere des Smart-Devices, bevorzugt mittels einer App für das des portablen Benutzerendgeräts, ist. Die Eingabeeinheit und/oder die Ausgabeeinheit können beispielsweise zumindest ein Sprachassistenzsystem utilisieren und/oder aufweisen. Vorteilhaft kann ein besonders hoher Bedienkomfort bei der Bedienung des Gargeräts erreicht werden, wenn Informationen mittels der Ausgabeeinheit portabel an den Bediener übermittelt und/oder wenn Einstellungen der Heizeinheit mittels der Eingabeeinheit portabel von dem Bediener angepasst werden können.

Das Verfahren kann den Heizschritt aufweisen, in welchem das Gargeschirr und insbesondere zumindest das Fluid in dem Gargeschirr erhitzt wird. Das Fluid wird in dem Heizschritt vorzugsweise in den Zielzubereitungszustand überführt. Das Verfahren weist vorzugsweise den Sensierungsschritt auf, in welchem die Sensoreinheit zumindest eine Kenngröße eines Schalls ausgehend von dem Gargeschirr ermittelt. Die Sensoreinheit ermittelt in dem Sensierungsschritt die zumindest eine Kenngröße des charakteristischen Schalls in dem Zielzubereitungszustand. Die Sensoreinheit ermittelt in dem Sensierungsschritt insbesondere einen nicht-charakteristischen Schall, beispielhaft keinen Schall, außerhalb des Zielzubereitungszustands. Der Sensierungsschritt wird während zumindest eines Teils des Heizschritts vorzugsweise kontinuierlich ausgeführt und/oder beispielhaft periodisch wiederholt. Der Sensierungsschritt findet vorzugsweise zumindest teilweise gleichzeitig zu dem Heizschritt statt. In dem Auswerteschritt des Verfahrens wertet die Auswerteeinheit vorzugsweise die zumindest eine Kenngröße des Schalls ausgehend von dem Gargeschirr aus. Der Auswerteschritt findet insbesondere zeitlich nach dem Sensierungsschritt statt. Die Auswerteeinheit erkennt in dem Auswerteschritt vorzugsweise den charakteristischen Schall und den dem charakteristischen Schall zugeordneten Zielzubereitungszustand basierend auf der ermittelten Kenngröße des charakteristischen Schalls in dem Zielzubereitungszustand. Die Auswerteeinheit erkennt in dem Auswerteschritt vorzugsweise eine Abwesenheit des charakteristischen Schalls und des Zielzubereitungszustands in dem Gargeschirr außerhalb des Zielzubereitungszustands.

Unter "vorgesehen" soll speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Weiterhin wird vorgeschlagen, dass eine, insbesondere die oben genannte, Steuereinheit in dem Verfahren, insbesondere in einem Ansteuerungsschritt des Verfahrens basierend auf der Erkennung des charakteristischen Schalls und des Zielzubereitungszustands mittels der Auswerteeinheit zumindest ein Steuersignal, insbesondere zu einer Steuerung der Heizeinheit, erzeugt. Das Steuersignal wird vorzugsweise erzeugt, wenn ein Vorliegen des charakteristischen Schalls und des Zielzubereitungszustands erkannt wird. Der Ansteuerungsschritt wird vorzugsweise, insbesondere zeitlich nach dem Auswerteschritt, bei der Erkennung des Vorliegens des charakteristischen Schalls und des Zielzubereitungszustands in dem Auswerteschritt, ausgeführt. Das Steuersignal ist insbesondere basierend auf dem erkannten charakteristischen Schall angepasst. Insbesondere kann ein Bedienkomfort gesteigert werden, indem eine Menge an notwendigen Bedieneroperationen an der Eingabeeinheit durch einen Bediener durch das automatische Steuersignal reduziert werden kann. Vorteilhaft kann eine Sicherheit gesteigert werden, indem das Steuersignal automatisiert erzeugt wird, wenn der Zielzubereitungszustand, welcher Schaden zu einem Inhalt des Gargeschirrs und/oder zu dem Gargeschirr und/oder zu dem Gargerät, beispielsweise durch ein Überhitzen, zuführen könnte, erkannt wird. Insbesondere kann ein ungewollter Zustand, beispielsweise ein Überkochen des Fluids, welcher beispielsweise eine Reinigung des Gargeräts bedingt, vermieden werden. Weiterhin kann eine Energieeffizienz gesteigert werden, indem das Steuersignal automatisiert erzeugt wird, wenn der Zielzubereitungszustand vorliegt und somit eine unnötige Erhitzung vermieden werden kann. Insbesondere kann ein Kochergebnis durch das Steuersignal basierend auf der Erkennung des Zielzubereitungszustands verbessert werden. Das Steuersignal, insbesondere eine Art der Ansteuerung der Heizeinheit, ist vorzugsweise von dem erkannten charakteristischen Schall, insbesondere von einer erkannten Art des charakteristischen Schalls, welches insbesondere genau einer Art des Gargeschirrs zugeordnet ist, und/oder von der erkannten Art des Gargeschirrs, abhängig. Die Steuereinheit ist, insbesondere in dem Ansteuerungsschritt, vorzugsweise dazu vorgesehen, eine von der Heizeinheit, insbesondere von dem zumindest einen Heizelement, welches der Heizzone, in welchem das Gargeschirr angeordnet ist, zugeordnet ist, abgegebene Heizleistung basierend auf der Erkennung des Zielzubereitungszustands, insbesondere bei Erkennung des Vorliegens des charakteristischen Schalls und des Zielzubereitungszustands und vorzugsweise basierend auf einer erkannten Art des charakteristischen Schalls und/oder einer erkannten Art des Gargeschirrs, zu reduzieren und/oder auszusetzen. Das Steuersignal ist vorzugsweise zu einer Steuerung des zumindest einen Bauteils zur Versorgung der Heizeinheit, insbesondere zur Versorgung jedes Heizelements, welches der Heizzone, in welchem das Gargeschirr angeordnet ist, zugeordnet ist, vorgesehen. Beispielsweise ist das Steuersignal, insbesondere in der Ausgestaltung des Gargeschirrs als Induktionskochfeld, zu einer Steuerung des zumindest eines Wechselrichters der Heizeinheit, insbesondere jedes Wechselrichters, welcher einen Schwingkreis mit dem zumindest einen Heizelement, welches der Heizzone, in welchem das Gargeschirr angeordnet ist, zugeordnet ist, ausbildet vorgesehen. Das Steuersignal ist vorzugsweise dazu vorgesehen, eine Temperatur in dem Gargeschirr zu reduzieren. Beispielsweise kann das Steuersignal zumindest dazu vorgesehen sein, eine Erzeugung des charakteristischen Schalls zu stoppen. Beispielsweise kann die Steuereinheit die Heizeinheit, insbesondere in dem Ansteuerungsschritt, derart ansteuern, dass die Temperatur des Gargeschirrs unmittelbar unterhalb einer Temperatur, für welche der charakteristische Schall einsetzt, gehalten wird oder, derart ansteuern, dass die Temperatur auf eine Raumtemperatur abfällt.

Ferner wird vorgeschlagen, dass basierend auf der Erkennung des charakteristischen Schalls und des Zielzubereitungszustands, mittels der Auswerteeinheit, insbesondere in einem Ausgabeschritt, zumindest ein Hinweis an einer, insbesondere der oben genannten, Ausgabeeinheit ausgegeben wird. Die Auswerteeinheit und/oder die Steuereinheit sind/ist vorzugsweise zu einer Erzeugung und der Ausgabe des Hinweises an der Ausgabeeinheit vorgesehen. Der Hinweis wird vorzugsweise ausgegeben, wenn das Vorliegen des charakteristischen Schalls und des Zielzubereitungszustands erkannt wird. Der Ausgabeschritt wird vorzugsweise, insbesondere zeitlich nach dem Auswerteschritt, bei der Erkennung des Vorliegens des charakteristischen Schalls und des Zielzubereitungszustands ausgeführt. Vorteilhaft kann der Bediener über das Vorliegen des Zielzubereitungszustands informiert und/oder gewarnt werden, wodurch ein Bedienkomfort und/oder eine Sicherheit gesteigert werden können. Insbesondere kann ein Benutzerfokus wiederhergestellt werden, wenn ein Kochvorgang fertig ist und der Zielzubereitungszustand vorliegt. Vorzugsweise ist der Hinweis, insbesondere ein Informationsgehalt des Hinweises, von dem erkannten charakteristischen Schall, insbesondere von einer erkannten Art des charakteristischen Schalls und/oder von der erkannten Art des Gargeschirrs abhängig. Der Hinweis kann eine Information und/oder eine Warnung über den Zielzubereitungszustand und beispielsweise über das Gargeschirr und/oder zumindest eine Bedieneranweisung, beispielsweise eine Anweisung, das Gargeschirr aus der Heizzone zu entfernen und/oder eine Heizstufe der Heizeinheit, insbesondere des zumindest einen Heizelements, in der Heizzone zumindest zu reduzieren, aufweisen. Der Hinweis wird vorzugsweise akustisch und/oder optisch ausgegeben. Alternativ oder zusätzlich kann der Hinweis haptisch ausgegeben werden. Vorzugsweise ist der Hinweis zu einem Auslösen und/oder zu einer Vereinfachung einer Bedieneroperation und/oder zu einer Bereitstellung eines "Shortcuts" für die Bedieneroperation an der Eingabeeinheit vorgesehen. Vorteilhaft kann ein dem Bediener lästig erscheinender charakteristischer Schall, wie beispielsweise das Pfeifen eines Pfeifkessels in dem Zielzubereitungszustand, mittels des Steuersignals, insbesondere der Reduktion der Heizleistung, welches den charakteristischen Schall stoppt, und mittels des Hinweises zu einem weniger lästigen Signal an den Bediener, welches über das Vorliegen des Zielzubereitungszustands informiert, insbesondere flexibel, abgeändert werden, wodurch insbesondere ein Bedienkomfort gesteigert werden kann. Es wäre denkbar, dass, insbesondere in einem weiteren Ausgabezustand, ein weiterer Hinweis ausgegeben wird, wenn, insbesondere in dem Auswerteschritt, eine Abwesenheit des charakteristischen Schalls erkannt wird, wobei der weitere Hinweis beispielsweise über die Abwesenheit des Zielzubereitungszustands informieren kann.

Zudem wird vorgeschlagen, dass der charakteristische Schall sich von einem allgemeinen, insbesondere passiven und/oder zufälligen, Schall, insbesondere einem Geräusch, welcher einem, insbesondere dem oben genannten, Fluid in dem Gargeschirr in dem Zielzubereitungszustand direkt, insbesondere ungemittelt durch das Gargeschirr, zugeordnet ist und bevorzugt direkt in dem Fluid erzeugt wird, unterscheidet. Vorteilhaft kann der Zielzubereitungszustand eines spezifischen Gargeschirrs besonders präzise ermittelt werden, wobei insbesondere zudem die Art des Gargeschirrs basierend auf dem charakteristischen Schall erkannt werden kann. Der allgemeine Schall ist insbesondere als ein Geräusch, welches direkt von dem Fluid, vorzugsweise direkt in dem Fluid, insbesondere bei einer Kavitation des Fluids, ausgeht, wie beispielsweise als ein Blubbern des Fluids, ausgebildet. Der charakteristische Schall ist vorzugsweise durch einen Aufbau des Gargeschirrs bedingt und insbesondere vorgegeben. Vorzugsweise ist der charakteristische Schall als ein über eine Interaktion zwischen dem Gargeschirr und dem Fluid in dem Zielzubereitungszustand erzeugter Schall ausgebildet.

Ferner wird vorgeschlagen, dass mittels der Auswerteeinheit, insbesondere in dem Auswerteschritt, ein als zumindest im Wesentlichen reiner Ton ausgebildeter charakteristischer Schall erkennbar ist. Vorteilhaft kann der charakteristische Schall auf eine besonders zuverlässige Art erkannt werden, wobei Anforderungen an eine Rechenleistung der Auswerteeinheit zu der Erkennung insbesondere reduziert werden können. Der zumindest im Wesentlichen reine Ton ist vorzugsweise, insbesondere zumindest zeitweise jeweils, zumindest im Wesentlichen aus einer einzelnen Frequenz, insbesondere einer Grundfrequenz, gebildet, wobei insbesondere weniger als 30 %, vorzugsweise weniger als 20 % und besonders bevorzugt weniger als 10 % einer Gesamtlautstärke des Tons eine von der Frequenz abweichende Frequenz aufweist, beispielsweise bedingt durch Obertöne und/oder weitere Nebengeräusche ausgehend von dem Gargeschirr in dem Zielzubereitungszustand. Der zumindest im Wesentlichen reine Ton kann in verschiedenen Zeitabschnitten des Zielzubereitungszustands zumindest im Wesentlichen aus jeweils einer Frequenz gebildet sein, welche sich zwischen den Zeitabschnitten jeweils voneinander unterscheidet, wobei die Änderung der Frequenz durch eine voneinander abweichende Temperatur des Fluids in den verschiedenen Zeitabschnitten bedingt sein kann, beispielsweise bei einem Pfeifen eines als Pfeifkessel ausgebildeten Gargeschirrs, wobei der Zielzubereitungszustand für das Vorliegen des Pfeifens, also insbesondere bei Vorliegen des zumindest im Wesentlichen als reiner Ton ausgebildeten charakteristischen Schalls, vorliegt, eine Höhe des Pfeifens, also insbesondere eine Frequenz des Pfeifens, in dem Zielzubereitungszustand in verschiedenen Zeitabschnitten, insbesondere bei einer Änderung einer Temperatur in dem Gargeschirr in den Zeitabschnitten zueinander, voneinander abweichen kann. Insbesondere ist der zumindest im Wesentliche reine Ton in jedem Zeitabschnitt jeweils aus zumindest im Wesentlichen genau einer Frequenz gebildet. Vorzugsweise ist mittels der Auswerteeinheit zumindest der als zumindest im Wesentlichen reiner Ton ausgebildete charakteristische Schall, insbesondere in dem Auswerteschritt, erkennbar. Alternativ wäre denkbar, dass mittels der Auswerteeinheit lediglich der als zumindest im Wesentlichen reiner Ton ausgebildete charakteristische Schall, insbesondere in dem Auswerteschritt, erkennbar ist. Alternativ oder zusätzlich ist denkbar, dass mittels der Auswerteeinheit, insbesondere in dem Auswerteschritt, ein als Klang ausgebildeter charakteristischer Schall erkennbar ist, welcher insbesondere einen Grundton und weitere Töne mit ganzzahligem Vielfachen einer Grundfrequenz des Grundtons, welche insbesondere mit dem Grundton überlagert sind, aufweist.

Weiterhin wird vorgeschlagen, dass mittels der Auswerteeinheit, insbesondere in dem Auswerteschritt, ein charakteristischer Schall erkennbar ist, welcher als ein von einem Pfeifaufsatz, insbesondere von einer Düse, eines als Pfeifkessel ausgebildeten Gargeschirrs ausgehender charakteristischer Schall ausgebildet ist. Das Strömungselement kann als ein Strömungskanal des Pfeifaufsatzes ausgebildet sein, wobei der Strömungskanal die Düse aufweist. Mittels der Auswerteeinheit, insbesondere in dem Auswerteschritt, ist vorzugsweise der charakteristische Schall, welcher insbesondere als das Pfeifen des Pfeifkessels in dem Zielzubereitungszustand ausgebildet ist, erkennbar. Vorzugsweise ist mittels der Auswerteeinheit ein Zielzubereitungszustand, welcher als ein Siedezustand einer Flüssigkeit in dem Pfeifkessel ausgebildet ist, erkennbar, wobei in dem Siedezustand Wasserdampf durch den Pfeifaufsatz, insbesondere durch die Düse, strömt und das Pfeifen bedingt. Vorteilhaft kann der Zielzubereitungszustand, insbesondere der Siedezustand, in dem Pfeifkessel besonders effizient, insbesondere auf besonders einfache und/oder präzise Weise, ermittelt werden. Bei der Erkennung, insbesondere in dem Auswerteschritt, des charakteristischen Schalls, insbesondere des Pfeifens, welcher als der von dem Pfeifaufsatz, insbesondere von der Düse, des als Pfeifkessel ausgebildeten Gargeschirrs ausgehende Schall ausgebildet ist, wird mittels der Steuereinheit, insbesondere in dem Ansteuerungsschritt, vorzugsweise zumindest ein Steuersignal erzeugt, durch welches eine Heizleistung des zumindest einen Heizelements, welches der Heizzone zugeordnet ist, reduziert wird. Vorzugsweise erzeugt die Steuereinheit, insbesondere in dem Ansteuerungsschritt, bei der Erkennung, insbesondere in dem Auswerteschritt, des charakteristischen Schalls, welcher als der von dem Pfeifaufsatz, insbesondere von der Düse, des als Pfeifkessel ausgebildeten Gargeschirrs ausgehende Schall ausgebildet ist, zumindest ein Steuersignal, dass das Fluid, insbesondere die Flüssigkeit, innerhalb des Pfeifkessels auf einer Temperatur unmittelbar unterhalb einer Temperatur, für welche der charakteristische Schall, insbesondere das Pfeifen einsetzt, bevorzugt unterhalb einer Siedetemperatur, hält. Vorteilhaft kann das Pfeifen, welches für den Bediener störend sein kann, gestoppt werden und die Flüssigkeit zudem warmgehalten werden.

Ferner wird vorgeschlagen, dass mittels der Auswerteeinheit, insbesondere in dem Auswerteschritt, ein als charakteristisches Geräusch ausgebildeter charakteristischer Schall erkennbar ist. Vorteilhaft kann die Auswerteeinheit den Zielzubereitungszustand basierend auf einem komplexen Schallsignal, insbesondere dem charakteristischen Geräusch, erkennen. Insbesondere kann eine besonders große Flexibilität bezüglich einer Anwendung des Verfahrens bei Gargeschirren, welche das charakteristische Geräusch emittieren, erreicht werden. Unter einem "Geräusch" soll insbesondere ein akustisches Signal, das durch aperiodische oder/oder stochastische mechanische Schwingungen entsteht und/oder über ein breites Frequenzspektrum verteilt ist, insbesondere ohne ausgeprägte tonale oder harmonische Struktur, verstanden werden.

Zudem wird vorgeschlagen, dass mittels der Auswerteeinheit, insbesondere in dem Auswerteschritt, ein charakteristischer Schall erkennbar ist, welcher als ein von einem als, insbesondere nicht-elektrischer, Dampfdruckkocher ausgebildeten Gargeschirr, insbesondere von einem Druckventil des Dampfdruckkochers, ausgehender charakteristischer Schall ausgebildet ist. Das Strömungselement kann als das Druckventil des Dampfdruckkochers ausgebildet sein. Der Dampfdruckkocher ist insbesondere als ein Druckkochtopf, insbesondere als ein Schnellkochtopf, ausgebildet ist. Vorzugsweise ist mittels der Auswerteeinheit, insbesondere in dem Auswerteschritt, ein charakteristischer Schall erkennbar, welcher als ein Zischen und/oder als ein unreines Pfeifen des Dampfdruckkochers in dem Zielzubereitungszustand ausgebildet. Vorzugsweise ist mittels der Auswerteeinheit ein Zielzubereitungszustand, welcher als ein Zustand, in welchem zumindest ein Betriebsdruck in dem Dampfdruckkocher erreicht ist und insbesondere Druck durch das Druckventil des Dampfdruckkochers abgelassen wird, um den Druck auf den Betriebsdruck zu regeln, ausgebildet ist, erkennbar. Der Dampfdruckkocher weist vorzugsweise das, insbesondere mechanisch und/oder elektrisch gesteuerte, Druckventil, auf, welches zu der Regelung des Drucks in dem Dampfdruckkocher auf den Betriebsdruck vorgesehen ist, wobei zu der Regelung überschüssiger Dampf durch das Druckventil des Dampfdruckkochers aus dem Dampfdruckkocher entweicht und das Entweichen den charakteristische Schall, insbesondere das Zischen und/oder das unreine Pfeifen, erzeugt. Vorteilhaft kann der Zielzubereitungszustand, insbesondere der Zustand, in welchem der Betriebsdruck des Dampfdruckkochers erreicht ist, besonders effizient, insbesondere auf besonders einfache und/oder präzise Weise, ermittelt werden. Die Steuereinheit erzeugt, insbesondere in dem Ansteuerschritt, bei der Erkennung des charakteristischen Schalls, welcher als ein von dem als Dampfdruckkocher ausgebildeten Gargeschirr ausgehender Schall ausgebildet ist, vorzugsweise zumindest ein Steuersignal, durch welches zumindest ein Parameter, insbesondere die Heizleistung, der Heizeinheit, insbesondere des zumindest einen Heizelements, welches der Heizzone auf welchem der Dampfdruckkocher angeordnet ist, zugeordnet ist, angepasst, insbesondere reduziert wird, insbesondere um den Betriebsdruck und/oder einen sicheren Innendruck im Dampfdruckkocher aufrechtzuerhalten. Die Steuereinheit ist, insbesondere in dem Ansteuerschritt, bei der Erkennung des charakteristischen Schalls, welcher als ein von dem als Dampfdruckkocher ausgebildeten Gargeschirr ausgehender Schall ausgebildet ist, vorzugsweise zu einer Reglung der Heizleistung des zumindest einen Heizelements zu einer Druckhaltefunktion, insbesondere auf den Betriebsdruck, vorgesehen.

Ferner wird vorgeschlagen, dass mittels der Auswerteeinheit, insbesondere in dem Auswerteschritt, ein charakteristischer Schall erkennbar ist, welcher als ein von einem Kaffeekochgeschirr ausgebildeten Gargeschirr ausgehender charakteristischer Schall ausgebildet ist. Insbesondere kann ein Überhitzen und/oder ein Verbrennen eines Kaffeepulvers, wodurch ein Geschmack eines erzeugten Kaffeewassers verschlechtert wird, und/oder ein Überhitzen und/oder ein Verbrennen des Kaffeekochgeschirrs, wodurch das Kaffeekochgeschirr beschädigt werden kann, vorteilhaft vermieden werden. Unter dem "Kaffeekochgeschirr" soll insbesondere eine Espressokanne und/oder eine Herdkanne verstanden werden. Vorzugsweise ist mittels der Auswerteeinheit, insbesondere in dem Auswerteschritt, ein charakteristischer Schall erkennbar, welcher als ein, insbesondere stoßweises, Zischen und/oder Gurgeln und/oder als ein Pfeifen ausgebildet ist. Vorzugsweise ist mittels der Auswerteeinheit ein Zielzubereitungszustand erkennbar, welcher als ein Zustand, in welchem der Kaffee in dem Kaffeekochgeschirr fertig zubereitet ist, ausgebildet ist. Insbesondere weist das Kaffeekochgeschirr eine obere und eine untere Kammer und einen Kaffeepulveraufnahmebereich auf, wobei ein Trichtereinsatz die untere Kammer und den Kaffeepulveraufnahmebereich verbindet. Ein Steigrohr des Kaffeekochgeschirrs verbindet insbesondere den Kaffeepulveraufnahmebereich und die obere Kammer. In einem initialen Zustand, insbesondere vor dem Heizschritt, ist insbesondere Wasser im flüssigen Zustand in der unteren Kammer des Kaffeekochgeschirrs angeordnet und die obere Kammer frei von Wasser ausgebildet. Das Wasser strömt in dem Heizschritt insbesondere von der unteren Kammer in den Kaffeepulveraufnahmebereich, in welchem das Kaffeepulver angeordnet ist und Kaffeewasser extrahiert wird, wobei das Kaffeewasser in die obere Kammer strömt. Das Wasser und das Kaffeewasser weisen jeweils insbesondere ein Gemisch aus flüssigem und gasförmigem Wasser auf, wobei ein gasförmiger Anteil während einem Ablauf des Heizschritts steigt. In dem dem Kaffeekochgeschirr zugeordneten Zielzubereitungszustand strömt vorzugsweise Wasserdampf, insbesondere zumindest im Wesentlichen lediglich Wasserdampf, vorzugsweise ein Gemisch, welches zumindest zu 70 %, bevorzugt zumindest zu 80 % und besonders bevorzugt zumindest zu 90 % aus Wasserdampf ausgebildet ist, durch das Steigrohr und/oder zumindest ein Großteil, insbesondere zumindest 70 %, bevorzugt zumindest 80 % und besonders bevorzugt zumindest 90 % des Wassers, welches in dem initialen Zustand in der unteren Kammer angeordnet ist, ist in Form des Kaffeewassers in der oberen Kammer angeordnet. Das Kaffeegargeschirr erzeugt den charakteristischen Schall vorzugsweise an einem Ende eines Extraktionsvorgangs, wenn zumindest im Wesentlichen lediglich Wasserdampf in dem Steigrohr aufsteigt. Vorzugsweise ist der charakteristische Schall, welcher dem Kaffeekochgeschirr zugeordnet ist, insbesondere das Pfeifen und/oder das Zischen und/oder das Gurgeln, durch einen verbleibenden Wasserdampf in der unteren Kammer und durch das Aufsteigen des Wasserdampfs in dem Steigrohr bedingt. Das Strömungselement kann als das Steigrohr des Kaffeekochgeschirrs ausgebildet sein. Die Steuereinheit erzeugt, insbesondere in dem Ansteuerungsschritt, bei der Erkennung des von dem als Kaffeekochgeschirr ausgebildeten Gargeschirr ausgehenden charakteristischen Schalls, insbesondere in dem Auswerteschritt, vorzugsweise zumindest ein Steuersignal, welches eine Heizleistung des zumindest einen Heizelements, welches der Heizzone, in welcher das Kaffeekochgeschirr angeordnet ist, vorzugsweise reduziert und bevorzugt das Heizelement ausschaltet.

Weiterhin wird vorgeschlagen, dass die Auswerteeinheit, insbesondere in dem Auswerteschritt, zu der Erkennung des charakteristischen Schalls und des Zielzubereitungszustands zumindest eine Frequenzauswertung und/oder zumindest eine zeitliche Auswertung der zumindest einen Kenngröße, insbesondere des Messsignals, ausführt. Vorteilhaft kann der charakteristische Schall auf eine besonders präzise und/oder einfache Weise erkannt werden. Insbesondere kann eine Art des charakteristischen Schalls, und insbesondere des Gargeschirrs, mittels der Frequenzauswertung und/oder zeitlichen Auswertung, vorteilhaft erkannt werden. Die Frequenzauswertung umfasst vorzugsweise eine Auswertung einer Häufigkeit und/oder einer Intensität von zumindest einem Anteil des Messsignals in Abhängigkeit von der Frequenz des jeweiligen Anteils des Messsignals. Vorzugsweise weist die Frequenzauswertung zumindest eine Fouriertransformation auf. Die Auswerteeinheit führt, insbesondere in dem Auswerteschritt, bevorzugt zu der Erkennung des charakteristischen Schalls und des Zielzubereitungszustands zumindest eine Fouriertransformation der zumindest einen Kenngröße, insbesondere des Messsignals, aus. Die zeitliche Auswertung kann beispielsweise Lock-in-Techniken utilisieren, wobei das Messsignal insbesondere mit einem Referenzsignal bestimmter Frequenz multipliziert wird und/oder zumindest eine Filterung des Signals aufweist.

Ein Ergebnis der Frequenzauswertung und/oder der zeitlichen Auswertung wird, insbesondere in dem Auswerteschritt, zu der Erkennung des charakteristischen Schalls und des Zielzubereitungszustands, und insbesondere des Gargeschirrs, vorzugsweise durch zumindest einen Algorithmus ausgewertet. Der Algorithmus kann als ein klassischer Algorithmus, welcher sich insbesondere von einem KI-Algorithmus unterscheidet, beispielsweise als ein einfacher Ton-Erkennungsalgorithmus, ausgebildet sein, insbesondere zu der Erkennung des als zumindest im Wesentlichen reiner Ton ausgebildeten charakteristischen Schalls. Alternativ oder zusätzlich wird vorgeschlagen, dass die Auswerteeinheit, insbesondere in dem Auswerteschritt, zu der Erkennung des charakteristischen Schalls und des Zielzubereitungszustands zumindest einen KI-Algorithmus ausführt. Der Algorithmus weist vorzugsweise zumindest einen KI-Algorithmus auf. Der Kl-Algorithmus kann den charakteristischen Schall und den Zielzubereitungszustand, und insbesondere das Gargeschirr, ausgehend von der unbearbeiteten zumindest einen Kenngröße, insbesondere ausgehend von dem unbearbeiteten Messsignal, wobei beispielhaft basierend auf mehreren Faltungsschichten (Convolutional Layers) in den ersten Schichten des Kl-Algorithmus Fouriertransformationen oder ähnliche Signalverarbeitungsschritte ablaufen, und/oder basierend auf dem Ergebnis der Frequenzauswertung und/oder der zeitlichen Auswertung der zumindest einen Kenngröße, insbesondere des Messignals, erkannt werden. Vorteilhaft kann auch ein besonders komplexer charakteristischer Schall, insbesondere das charakteristische Geräusch, mittels des Kl-Algorithmus besonders zuverlässig erkannt werden.

Das Verfahren, die Gargerätevorrichtung, das Gargerät und das Gargerätesystem sollen hierbei nicht auf die oben beschriebene Anwendung und Ausführungsform beschränkt sein. Insbesondere können das Verfahren, die Gargerätevorrichtung, das Gargerät und das Gargerätesystem zu einer Erfüllung einer hierin beschriebenen Funktionsweise eine von einer hierin genannten Anzahl von einzelnen Elementen, Bauteilen, Einheiten und Verfahrensschritten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Die Fachperson wird die Merkmale zweckmäßigerweise auch einzeln betrachten und zu sinnvollen weiteren Kombinationen zusammenfassen.

Es zeigen:
- Fig. 1: Eine schematische Darstellung eines Gargeräts mit einer Gargerätevorrichtung und einem auf dem Gargerät aufgestellten Gargeschirr in einer Ansicht von oben,
- Fig. 2: ein Ablaufdiagramm eines Verfahrens für die Gargerätevorrichtung,
- Fig. 3: eine Schnittansicht eines Teils des Gargeräts und des Gargeschirrs,
- Fig. 4: einen Graphen eines ausgewerteten Messsignals eines charakteristischen Schalls ausgehend von dem Gargeschirr aus Figur 3,
- Fig. 5: eine Schnittansicht eines Teils des Gargeräts und eines alternativ ausgebildeten Gargeschirrs,
- Fig. 6: eine Schnittansicht eines Teils des Gargeräts und eines alternativ ausgebildeten Gargeschirrs und
- Fig. 7: eine schematische Darstellung eines Gargerätesystems mit einer alternativen Ausgestaltung des Gargeräts und der Gargerätevorrichtung.

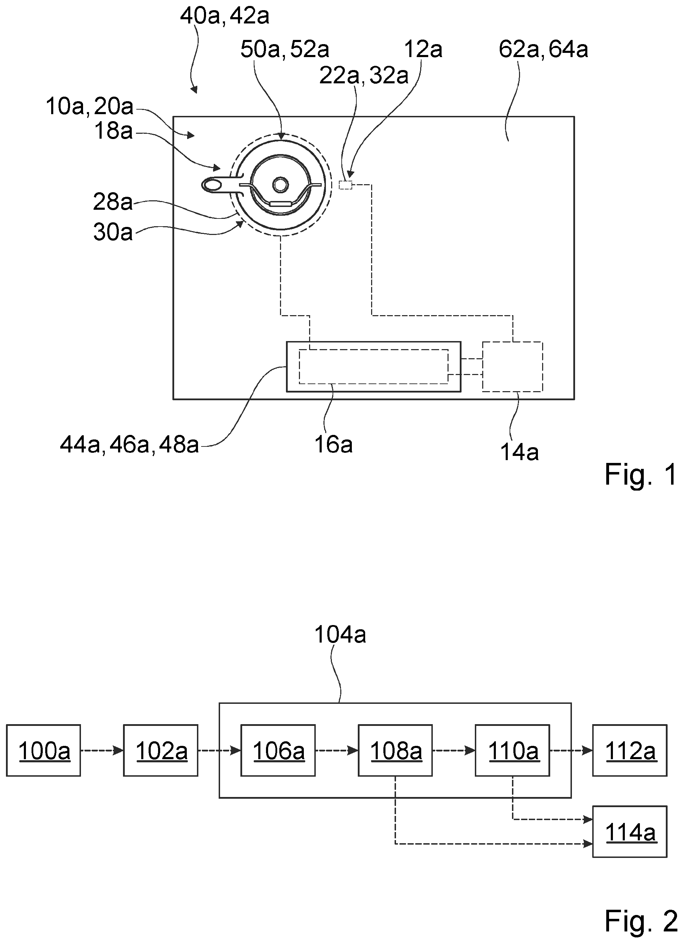

Figur 1 zeigt eine schematische Darstellung eines Gargeräts 40a. Das Gargerät 40a ist als ein Kochfeld 42a ausgebildet. Alternativ sind andere, der Fachperson sinnvoll erscheinende Gargeräte 40a denkbar.

Das Gargerät 40a weist zumindest eine Gargerätevorrichtung 10a auf. Die Gargerätevorrichtung 10a ist als eine Kochfeldvorrichtung 20a ausgebildet.

Die Gargerätevorrichtung 10a weist eine Heizeinheit 18a auf. Die Heizeinheit 18a ist dazu vorgesehen, zumindest ein Gargeschirr 50a zu erhitzen. Die Heizeinheit 18a weist zumindest ein Heizelement 28a auf. Vorliegend ist das Heizelement 28a beispielhaft als eine Heizspule, beispielsweise als eine Induktionsspule, ausgebildet.

Das Gargerät 40a weist ein Aufstellelement 62a auf. Die Heizeinheit 18a ist dazu vorgesehen, zumindest das Gargeschirr 50a aufgestellt auf dem Aufstellelement 62a zu beheizen. Das Aufstellelement 62a ist zu einem Kontakt mit dem Gargeschirr 50a zu dem Beheizen des Gargeschirrs 50a mittels der Heizeinheit 18a vorgesehen. Das Aufstellelement 62a ist vorliegend als eine Aufstellplatte 64a ausgebildet. Die Aufstellplatte 64a kann als eine Kochfeldplatte oder als eine Küchenarbeitsplatte ausgebildet sein. Alternativ wäre denkbar, dass das Aufstellelement 62a als ein Aufstellgitter (nicht dargestellt) eines als Gaskochfeld ausgebildeten Gargeräts 40a oder in einer anderen, der Fachperson als sinnvoll erscheinenden Ausführung, ausgebildet ist.

Die Heizeinheit 18a stellt zumindest eine Heizzone 30a des Gargeräts 40a bereit, in welcher das Gargeschirr 50a zu der Beheizung anordenbar ist. Die Heizzone 30a kann vorgegebene Ränder aufweisen oder flexibel auf dem Aufstellelement 62a ausgebildet sein.

Das Gargerät 40a weist eine Eingabeeinheit 46a auf. Das Gargerät 40a weist eine Ausgabeeinheit 44a auf. Das Gargerät 40a weist zumindest eine Bedienerschnittstelle 48a auf, welche die Eingabeeinheit 46a und die Ausgabeeinheit 44a aufweist. Es ist denkbar, dass die Eingabeeinheit 46a und/oder die Ausgabeeinheit 44a zumindest teilweise extern zu dem Gargerät 40a ausgebildet sind/ist, beispielsweise auf einem Smart-Device (nicht dargestellt) des Bedieners.

Die Gargerätevorrichtung 10a weist eine Sensoreinheit 12a auf. Die Sensoreinheit 12a ist dazu vorgesehen, zumindest eine Kenngröße eines charakteristischen Schalls ausgehend von dem durch die Heizeinheit 18a beheizten Gargeschirr 50a in einem Zielzubereitungszustand zu ermitteln. Die Sensoreinheit 12a weist zumindest ein Sensorelement 22a, insbesondere jeweils pro Heizzone 30a und/oder pro Heizelement 28a auf. Das Sensorelement 22a ist vorliegend als ein Beschleunigungssensor 32a ausgebildet. Alternativ oder zusätzlich ist eine andere, der Fachperson als sinnvoll erscheinende Ausgestaltung des Sensorelements 22a denkbar, beispielsweise als ein akustischer Sensor oder dergleichen.

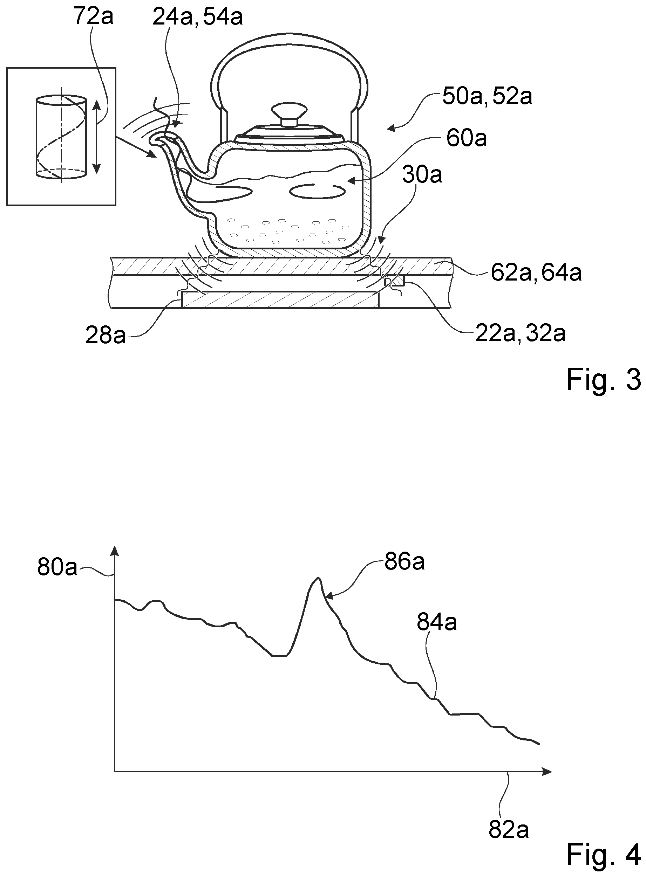

Das zumindest eine Sensorelement 22a steht in Kontakt mit dem Aufstellelement 62a (vgl. Figur 3). Das zumindest eine Sensorelement 22a ist beispielhaft an einer Unterseite der Aufstellplatte 64a fixiert.

Die Gargerätevorrichtung 10a weist eine Auswerteeinheit 14a auf. Die Auswerteeinheit 14a ist dazu vorgesehen, den charakteristischen Schall und einen dem Schall zugeordneten Zielzubereitungszustand in dem Gargeschirr 50a zu erkennen. Die Auswerteeinheit 14a ist dazu vorgesehen, den charakteristischen Schall und einen dem Schall zugeordneten Zielzubereitungszustand in dem Gargeschirr 50a basierend auf der zumindest einen Kenngröße ermittelt mittels der Sensoreinheit 12a zu erkennen. Die Auswerteeinheit 14a ist dazu vorgesehen, eine Art des Gargeschirrs 50a basierend auf der zumindest einen Kenngröße ermittelt mittels der Sensoreinheit 12a zu ermitteln.

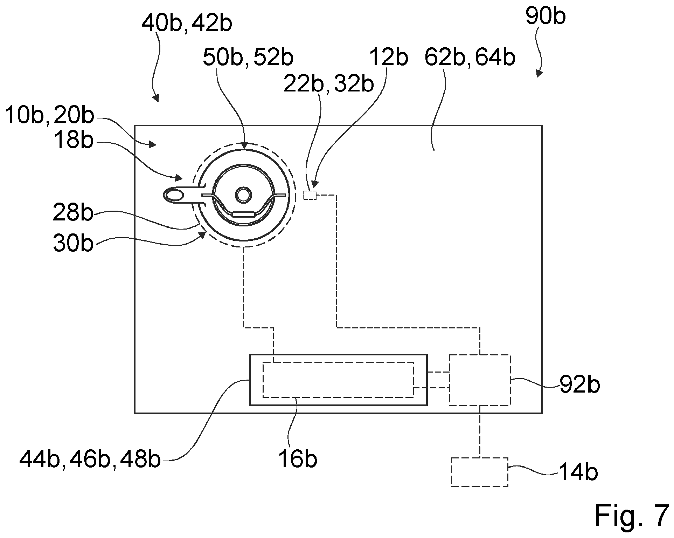

Alternativ ist denkbar, dass die Auswerteeinheit 14a zumindest teilweise separat von der Gargerätevorrichtung 10a, insbesondere von dem Gargerät 40a, ausgebildet ist (vgl. Figur 7).

Die Gargerätevorrichtung 10a weist eine Steuereinheit 16a auf. Alternativ ist denkbar, dass die Steuereinheit 16a zumindest teilweise separat von der Gargerätevorrichtung 10a, insbesondere von dem Gargerät 40a, ausgebildet ist.

Figur 2 zeigt ein Ablaufdiagramm eines Verfahrens für die Gargerätevorrichtung 10a, insbesondere die Kochfeldvorrichtung 20a, zu dem Erkennen des Zielzubereitungszustands in dem Gargeschirr 50a, wobei die Sensoreinheit 12a die zumindest eine Kenngröße des charakteristischen Schalls ausgehend von dem Gargeschirr 50a in dem Zielzubereitungszustand ermittelt und wobei die Auswerteeinheit 14a den charakteristischen Schall und den dem Schall zugeordneten Zielzubereitungszustand in dem Gargeschirr 50a erkennt.

Das Verfahren weist einen Heizschritt 100a auf, in welchem das Gargeschirr 50a mittels der Heizeinheit 18a beheizt wird. Die Steuereinheit 16a steuert und/oder regelt die Beheizung des Gargeschirrs 50a in dem Heizschritt 100a, insbesondere basierend auf einer Eingabe des Bedieners an der Eingabeeinheit 46a.

Das Gargeschirr 50a wird in dem Heizschritt 100a mittels der Beheizung in einen Zielzubereitungszustand überführt. In dem Zielzubereitungszustand geht von dem Gargeschirr 50a der charakteristische Schall aus. Das Gargeschirr 50a erzeugt den charakteristischen Schall in dem Zielzubereitungszustand basierend auf einem Zustand eines Fluids 60a in dem Gargeschirr 50a.

Der charakteristische Schall unterscheidet sich von einem allgemeinen Schall, welcher dem Fluid 60a in dem Gargeschirr 50a in dem Zielzubereitungszustand direkt zugeordnet ist. Der charakteristische Schall ist für das Gargeschirr 50a und den Zielzubereitungszustand charakteristisch. Das Gargeschirr 50a weist zumindest ein Strömungselement 24a auf, welches zu der Erzeugung des charakteristischen Schalls in dem Zielzubereitungszustand vorgesehen ist (vgl. Figuren 3, 5 und 6).

Das Verfahren weist zumindest einen Sensierungsschritt 102a auf, in welchem die Sensoreinheit 12a Kenngrößen von Schall ausgehend von dem Gargeschirr 50a sensiert. In dem Sensierungsschritt 102a wird die zumindest eine Kenngröße des charakteristischen Schalls ausgehend von dem Gargeschirr 50a in dem Zielzubereitungszustand ermittelt, wenn der charakteristische Schall vorliegt.

Mittels der Sensoreinheit 12a ist in dem Sensierungsschritt 102a in einem Zielzubereitungszustand zumindest eine Kenngröße eines charakteristischen Schalls ermittelbar, welcher zumindest im Wesentlichen als ein reiner Ton ausgebildet ist, wenn dieser charakteristische Schall vorliegt.

Mittels der Sensoreinheit 12a ist in dem Sensierungsschritt 102a in einem Zielzubereitungszustand zumindest eine Kenngröße eines charakteristischen Schalls ermittelbar, welcher als ein von einem Pfeifaufsatz 54a eines als Pfeifkessel 52a ausgebildeten Gargeschirrs 50a ausgehender charakteristischer Schall ausgebildet ist, wenn dieser charakteristische Schall vorliegt (vgl. Figuren 1 und 3).

Mittels der Sensoreinheit 12a ist in dem Sensierungsschritt 102a in einem Zielzubereitungszustand zumindest eine Kenngröße eines charakteristischen Schalls ermittelbar, welcher als ein charakteristisches Geräusch ausgebildet ist, wenn dieser charakteristische Schall vorliegt.

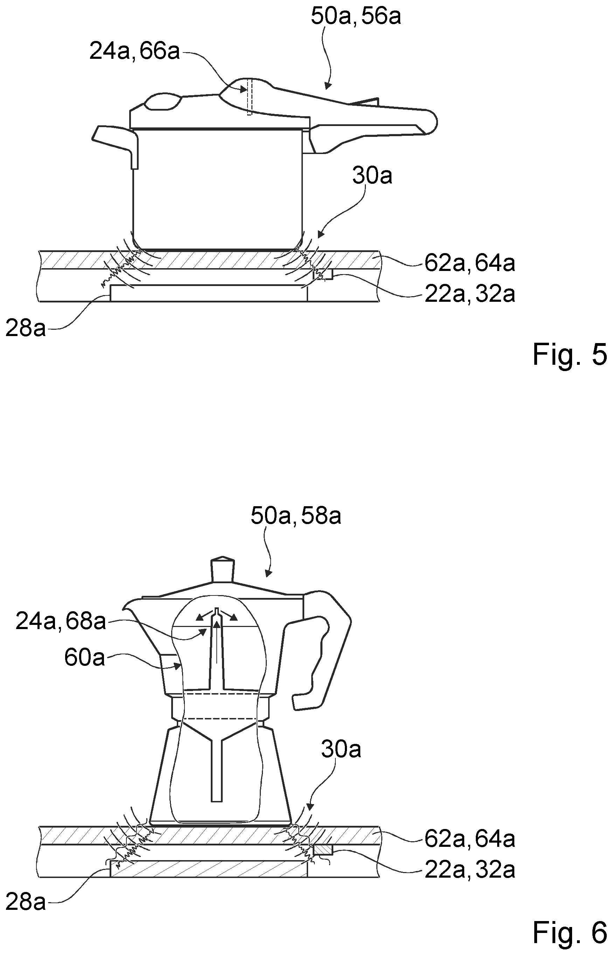

Mittels der Sensoreinheit 12a ist in dem Sensierungsschritt 102a in einem Zielzubereitungszustand zumindest eine Kenngröße eines charakteristischen Schalls ermittelbar, welcher als ein von einem als Dampfdruckkocher 56a ausgebildeten Gargeschirrs 50a ausgehender charakteristischer Schall ausgebildet ist, wenn dieser charakteristische Schall vorliegt (vgl. Figur 5). Der charakteristische Schall kann als ein in dem Zielzubereitungszustand von einem als Ventil 66a ausgebildeten Strömungselements 24a erzeugter charakteristischer Schall ausgebildet sein.

Mittels der Sensoreinheit 12a ist in dem Sensierungsschritt 102a in einem Zielzubereitungszustand zumindest eine Kenngröße eines charakteristischen Schalls ermittelbar, welcher als ein von einem Kaffeekochgeschirr 58a ausgebildeten Gargeschirr 50a ausgehender charakteristischer Schall ausgebildet ist, wenn dieser charakteristische Schall vorliegt (vgl. Figur 6). Der charakteristische Schall kann als ein in dem Zielzubereitungszustand von einem als Steigrohr 68a ausgebildeten Strömungselement 24a erzeugter charakteristischer Schall ausgebildet sein.

Die zumindest eine ermittelte Kenngröße wird in dem Sensierungsschritt 102a an die Auswerteeinheit 14a übermittelt.

In einem Auswerteschritt 104a des Verfahrens wird der charakteristische Schall und der dem charakteristischen Schall zugeordnete Zielzubereitungszustand in dem Gargeschirr 50a basierend auf der zumindest einen Kenngröße des charakteristischen Schalls ermittelt in dem Sensierungsschritt 102a von der Auswerteeinheit 14a erkannt.

Die Auswerteeinheit 14a erkennt in dem Auswerteschritt 104a den charakteristischen Schall, welcher sich von einem allgemeinen Schall, welcher dem Zielzubereitungszustand des Fluids 60a direkt zugeordnet ist, unterscheidet.

Mittels der Auswerteeinheit 14a ist in dem Auswerteschritt 104a der charakteristische Schall erkennbar, welcher als der zumindest im Wesentlichen reine Ton ausgebildet ist, wenn dieser charakteristische Schall vorliegt.

Mittels der Auswerteeinheit 14a ist in dem Auswerteschritt 104a der charakteristische Schall erkennbar, welcher als der von einem Pfeifaufsatz 54a des als Pfeifkessel 52a ausgebildeten Gargeschirrs 50a ausgehender charakteristischer Schall ausgebildet ist, wenn dieser charakteristische Schall vorliegt (vgl. Figur 3).

Mittels der Auswerteeinheit 14a ist in dem Auswerteschritt 104a der als charakteristisches Geräusch ausgebildete charakteristische Schall erkennbar, wenn dieser charakteristische Schall vorliegt. Alternativ wäre denkbar, dass die Auswerteeinheit 14a lediglich dazu vorgesehen ist, den charakteristischen Schall, welcher als der zumindest im Wesentlichen reine Ton ausgebildet ist, zu erkennen.

Mittels der Auswerteeinheit 14a ist in dem Auswerteschritt 104a der charakteristische Schall erkennbar, welcher als der von dem als Dampfdruckkocher 56a ausgebildeten Gargeschirr 50a ausgehende charakteristische Schall ausgebildet ist, wenn dieser charakteristische Schall vorliegt (vgl. Figur 5).

Mittels der Auswerteeinheit 14a ist in dem Auswerteschritt 104a der charakteristische Schall erkennbar, welcher als der von einem Kaffeekochgeschirr 58a ausgebildeten Gargeschirr 50a ausgehende charakteristische Schall ausgebildet ist, wenn dieser charakteristische Schall vorliegt (vgl. Figur 6).

Der Auswerteschritt 104a weist einen Vorverarbeitungsschritt 106a auf, in welchem ein Messsignal ausgehend von der Sensoreinheit 12a aufweisend die zumindest eine Kenngröße vorverarbeitet wird. Die Vorverarbeitung kann beispielsweise eine Filterung und/oder eine Normierung und/oder eine Korrektur, beispielsweise basierend auf einer Sensitivität der Sensoreinheit 12a und/oder des Sensorelements 22a, des Messsignals aufweisen.

Der Auswerteschritt 104a weist einen Merkmalerkennungsschritt 108a auf, in welchem Merkmale des Messsignals, insbesondere des vorverarbeiteten Messsignals, aufweisend die zumindest eine Kenngröße ermittelt werden. In dem Merkmalerkennungsschritt 108a kann von der Auswerteeinheit 14a eine Frequenzanalyse ausgeführt werden und/oder zumindest eine Grundfrequenz und/oder statistische Informationen des Messsignals aufweisend die zumindest eine Kenngröße ermittelt werden.

Der Auswerteschritt 104a weist einen Zielerkennungsschritt 110a auf, in welchem der charakteristische Schall und der Zielzubereitungszustand des Gargeschirrs 50a basierend auf dem vorverarbeiteten Messsignal aus dem Vorverarbeitungsschritt 106a und/oder basierend auf den erkannten Merkmalen des Messsignals aus dem Merkmalerkennungsschritt 108a erkannt werden.

Die Auswerteeinheit 14a führt in dem Auswerteschritt 104a zu der Erkennung des charakteristischen Schalls und des Zielzubereitungszustands, insbesondere in dem Vorverarbeitungsschritt 106a und/oder in dem Merkmalerkennungsschritt 108a, zumindest eine Frequenzauswertung und/oder zumindest eine zeitliche Auswertung der zumindest einen Kenngröße, insbesondere des Messsignals, aus.

Die Auswerteeinheit 14a führt in dem Auswerteschritt 104a, insbesondere zumindest in dem Merkmalerkennungsschritt 108a, zu der Frequenzauswertung zumindest eine Fouriertransformation der zumindest einen Kenngröße, insbesondere des Messsignals, aus.

Die Auswerteeinheit 14a kann in dem Auswerteschritt 104a, insbesondere zumindest in dem Merkmalerkennungsschritt 108a, zu der Erkennung des charakteristischen Schalls und des Zielzubereitungszustands zumindest einen Kl-Algorithmus ausführen, vorzugsweise zumindest, wenn die Auswerteeinheit 14a zu der Erkennung des als charakteristisches Geräusch ausgebildeten charakteristischen Schalls vorgesehen ist. Alternativ oder zusätzlich kann die Auswerteeinheit 14a in dem Auswerteschritt 104a zu der Erkennung zumindest einen Algorithmus ausführen, welcher sich von einem Kl-Algorithmus unterscheidet.

Das Verfahren weist einen Ansteuerungsschritt 112a auf, in welchem die Steuereinheit 16a basierend auf der Erkennung des charakteristischen Schalls und des Zielzubereitungszustands mittels der Auswerteeinheit 14a zumindest ein Steuersignal erzeugt. Die Steuereinheit 16a reduziert in dem Ansteuerungsschritt 112a eine von dem zumindest einen Heizelement 28a, welches der Heizzone 30a zugeordnet ist, in welcher das Gargeschirr 50a angeordnet ist, abgegebene Heizleistung bei Erkennung des Zielzubereitungszustands.

Basierend auf der Erkennung des charakteristischen Schalls und des Zielzubereitungszustands wird zumindest in einem Ausgabeschritt 114a des Verfahrens ein Hinweis, beispielsweise eine Information und/oder eine Warnung über das Vorliegen des Zielzubereitungszustands und/oder zumindest eine Bedieneranweisung, an der Ausgabeeinheit 44a ausgegeben.

Figur 3 zeigt eine schematische Schnittansicht eines Teils des Gargeräts 40a und des Gargeschirrs 50a, welches als der Pfeifkessel 52a ausgebildet ist.

Figur 4 zeigt einen Graphen eines Ergebnisses der Frequenzauswertung, insbesondere zumindest einer Fouriertransformation, des Auswerteschrittes 104a, insbesondere des Merkmalerkennungsschritts 108a, des Messsignals, welches die zumindest eine Kenngröße des charakteristischen Schalls, welcher als der zumindest im Wesentlichen reine Ton ausgebildet ist, aufweist.

Der Graph zeigt eine Kurve 84a auf einer Achse 80a einer Intensität über einer Achse 82a einer Frequenz. Es ist ein Peak 86a der Kurve 84a erkennbar, welcher an der Grundfrequenz des zumindest im Wesentlichen reinen Tons angeordnet ist. Der Peak 86a kann sich während des Zielzubereitungszustands verschieben.

Die Grundfrequenz ist von einem Zustand des Fluids 60a und von einem Aufbau des Gargeschirrs 50a abhängig, wobei die Grundfrequenz vorliegend einer Wellenlänge 72a entspricht (vgl. Figur 3)

Figur 5 zeigt eine schematische Schnittansicht eines Teils des Gargeräts 40a und das Gargeschirr 50a, welches als der Dampfdruckkocher 56a ausgebildet ist.

Figur 6 zeigt einen schematischen Teilschnitt des Gargeräts 40a und des Gargeschirrs 50a, welches als das Kaffeekochgeschirr 58a ausgebildet ist.

Von mehrfach vorhandenen Objekten ist in den Figuren jeweils lediglich eines mit einem Bezugszeichen versehen.

In Figur 7 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 6 verwiesen werden kann. Zur Unterscheidung der Ausführungsbeispiele ist der Buchstabe a in den Bezugszeichen des Ausführungsbeispiels in Figuren 1 bis 6 durch den Buchstaben b in den Bezugszeichen des Ausführungsbeispiels der Figur 7 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 6 verwiesen werden.

Figur 7 zeigt ein Gargerätesystem 90b aufweisend einer alternativen Ausgestaltung der Gargerätevorrichtung aus Figur 1, wobei die Gargerätevorrichtung 10b frei zumindest eines Teils der Auswerteeinheit 14b ausgebildet ist.

Das Gargerätesystem 90b ist zu einer Ausführung eines Verfahrens für die Gargerätevorrichtung 10b zur Erkennung eines Zielzubereitungszustands in einem Gargeschirr 50b vorgesehen. Das Gargerätesystem 90d weist die Gargerätevorrichtung 10b und die Auswerteeinheit 14b auf. Das Gargerätesystem 90b kann ein Gargerät 40b aufweisen.

Die Auswerteeinheit 14b ist zumindest teilweise separat zu der Gargerätevorrichtung 10b und insbesondere zu dem Gargerät 40b ausgebildet. Die Auswerteeinheit 14b ist beispielhaft vollständig separat zu der Gargerätevorrichtung 10b und insbesondere zu dem Gargerät 40b ausgebildet.

Die Auswerteeinheit 14b kann zumindest teilweise zumindest als ein Teil einer Datenwolken-Einheit (nicht dargestellt) und/oder zumindest teilweise zumindest als ein Teil eines Benutzerendgeräts (nicht dargestellt), beispielsweise eines Smart-Devices, ausgebildet sein.

Die Auswerteeinheit 14b und die Gargerätevorrichtung 10b sind zumindest datentechnisch, insbesondere zumindest teilweise, beispielhaft vollständig, drahtlos, miteinander verbunden.

Die Gargerätevorrichtung 10b weist eine Kommunikationseinheit 92b auf, welche zu einer Übermittlung eines von einer Sensoreinheit 12b ermittelten Messsignals aufweisend zumindest eine Kenngröße an den separat von der Gargerätevorrichtung 10b ausgebildeten Teil der Auswerteeinheit 14b, insbesondere an die separat von der Gargerätevorrichtung 10b ausgebildete Auswerteeinheit 14b, vorgesehen ist.

Die Auswerteeinheit 14b ist zu einer Übermittlung eines Auswerteergebnisses an die Kommunikationseinheit 92b vorgesehen, welche das Auswerteergebnis an eine Steuereinheit 16b und/oder eine Ausgabeeinheit 44b der Gargerätevorrichtung 10b übermittelt.

Die Gargerätevorrichtung 10b weist die Steuereinheit 16b auf. Alternativ ist denkbar, dass die Steuereinheit 16b zumindest teilweise separat zu der Gargerätevorrichtung 10b und insbesondere zu dem Gargerät 40b ausgebildet ist und beispielsweise zumindest teilweise zumindest als ein Teil einer Datenwolken-Einheit (nicht dargestellt) und/oder zumindest teilweise zumindest als ein Teil eines Benutzerendgeräts (nicht dargestellt) ausgebildet ist. Beispielsweise kann zumindest ein Steuersignal zu einer Ansteuerung einer Heizeinheit 18b basierend auf dem Auswerteergebnis extern von der Gargerätevorrichtung 10b und insbesondere von dem Gargerät 40b erzeugt und an die Kommunikationseinheit 92b übermittelt werden, welche das Steuersignal insbesondere an die Heizeinheit 18d weiterleitet.

Die Gargerätevorrichtung 10b weist die Ausgabeeinheit 44b und eine Eingabeeinheit 46a auf. Alternativ ist denkbar, dass die Ausgabeeinheit 44b und/oder die Eingabeeinheit 46a zumindest teilweise separat zu der Gargerätevorrichtung 10b und insbesondere zu dem Gargerät 40b ausgebildet ist und beispielsweise zumindest teilweise zumindest als ein Teil des Benutzerendgeräts (nicht dargestellt) ausgebildet ist.

### Bezugszeichen

- 10: Gargerätevorrichtung
- 12: Sensoreinheit
- 14: Auswerteeinheit
- 16: Steuereinheit
- 18: Heizeinheit
- 20: Kochfeldvorrichtung
- 22: Sensorelement
- 24: Strömungselement
- 28: Heizelement
- 30: Heizzone
- 32: Beschleunigungssensor
- 40: Gargerät
- 42: Kochfeld
- 44: Ausgabeeinheit
- 46: Eingabeeinheit
- 48: Bedienerschnittstelle
- 50: Gargeschirr
- 52: Pfeifkessel
- 54: Pfeifaufsatz
- 56: Dampfdruckkocher
- 58: Kaffeekochgeschirr
- 60: Fluid
- 62: Aufstellelement
- 64: Aufstellplatte
- 66: Ventil
- 68: Steigrohr
- 72: Wellenlänge
- 80: Achse
- 82: Achse
- 84: Kurve
- 86: Peak
- 90: Gargerätesystem
- 92: Kommunikationseinheit
- 100: Heizschritt
- 102: Sensierungsschritt
- 104: Auswerteschritt
- 106: Vorverarbeitungsschritt
- 108: Merkmalerkennungsschritt
- 110: Zielerkennungsschritt
- 112: Ansteuerungsschritt
- 114: Ausgabeschritt

## Patentansprüche

1. Verfahren für eine Gargerätevorrichtung (10a; 10b), insbesondere eine Kochfeldvorrichtung (20a; 20b), zu einem Erkennen eines Zielzubereitungszustands in einem Gargeschirr (50a; 50b), wobei die Gargerätevorrichtung (10a; 10b) eine Sensoreinheit (12a; 12b) aufweist, welche zumindest eine Kenngröße eines charakteristischen Schalls ausgehend von dem Gargeschirr (50a; 50b) in dem Zielzubereitungszustand ermittelt und wobei eine Auswerteeinheit (14a; 14b) den charakteristischen Schall und den dem charakteristischen Schall zugeordneten Zielzubereitungszustand in dem Gargeschirr (50a; 50b) erkennt.

2. Verfahren nach Anspruch 1, **dadurch gekennzeichnet, dass** eine Steuereinheit (16a; 16b) basierend auf der Erkennung des charakteristischen Schalls und des Zielzubereitungszustands zumindest ein Steuersignal erzeugt.

3. Verfahren nach Anspruch 1 oder 2, **dadurch gekennzeichnet, dass** basierend auf der Erkennung des charakteristischen Schalls und des Zielzubereitungszustands zumindest ein Hinweis an einer Ausgabeeinheit (44a; 44b) ausgegeben wird.

4. Verfahren nach einem der vorhergehenden Ansprüche, **dadurch gekennzeichnet, dass** sich der charakteristische Schall von einem allgemeinen Schall, welcher einem Fluid (60a) in dem Gargeschirr (50a; 50b) in dem Zielzubereitungszustand direkt zugeordnet ist, unterscheidet.

5. Verfahren nach einem der vorhergehenden Ansprüche, **dadurch gekennzeichnet, dass** mittels der Auswerteeinheit (14a; 14b) ein als zumindest im Wesentlichen reiner Ton ausgebildeter charakteristischer Schall erkennbar ist.

6. Verfahren nach einem der vorhergehenden Ansprüche, **dadurch gekennzeichnet, dass** mittels der Auswerteeinheit (14a; 14b) ein charakteristischer Schall erkennbar ist, welcher als ein von einem Pfeifaufsatz (54a) eines als Pfeifkessel (52a; 52b) ausgebildeten Gargeschirrs (50a; 50b) ausgehender charakteristischer Schall ausgebildet ist.

7. Verfahren nach einem der vorhergehenden Ansprüche, **dadurch gekennzeichnet, dass** mittels der Auswerteeinheit (14a; 14b) ein als charakteristisches Geräusch ausgebildeter charakteristischer Schall erkennbar ist.

8. Verfahren nach einem der vorhergehenden Ansprüche, **dadurch gekennzeichnet, dass** mittels der Auswerteeinheit (14a; 14b) ein charakteristischer Schall erkennbar ist, welcher als ein von einem als Dampfdruckkocher (56a) ausgebildeten Gargeschirr (50a; 50b) ausgehender charakteristischer Schall ausgebildet ist.

9. Verfahren nach einem der vorhergehenden Ansprüche, **dadurch gekennzeichnet, dass** mittels der Auswerteeinheit (14a; 14b) ein charakteristischer Schall erkennbar ist, welcher als ein von einem Kaffeekochgeschirr (58a) ausgebildeten Gargeschirr (50a; 50b) ausgehender charakteristischer Schall ausgebildet ist.

10. Verfahren nach einem der vorhergehenden Ansprüche, **dadurch gekennzeichnet, dass** die Auswerteeinheit (14a; 14b) zu der Erkennung des charakteristischen Schalls und des Zielzubereitungszustands zumindest eine Frequenzauswertung und/oder zumindest eine zeitliche Auswertung der zumindest einen Kenngröße ausführt.

11. Verfahren nach einem der vorhergehenden Ansprüche, **dadurch gekennzeichnet, dass** die Auswerteeinheit (14a; 14b) zu der Erkennung des charakteristischen Schalls und des Zielzubereitungszustands zumindest einen Kl-Algorithmus ausführt.

12. Gargerätevorrichtung (10a), insbesondere Kochfeldvorrichtung (20a), zu einer Ausführung des Verfahrens nach einem der Ansprüche 1 bis 11, mit einer Heizeinheit (18a), mit einer Auswerteeinheit (14a) und mit einer Sensoreinheit (12a), welche dazu vorgesehen ist, zumindest eine Kenngröße eines charakteristischen Schalls ausgehend von einem durch die Heizeinheit (18a) beheizten Gargeschirrs (50a) in einem Zielzubereitungszustand zu ermitteln, wobei die Auswerteeinheit (14a) dazu vorgesehen ist, den charakteristischen Schall und den dem charakteristischen Schall zugeordneten Zielzubereitungszustand in dem Gargeschirr (50a) zu erkennen.

13. Gargerät (40a), insbesondere Kochfeld (42a), mit zumindest einer Gargerätevorrichtung (10a) nach Anspruch 12.

14. Gargerätesystem (90b) zu einer Ausführung des Verfahrens nach einem der Ansprüche 1 bis 11 mit einer Gargerätevorrichtung (10b) und einer Auswerteeinheit (14b).
